(19) Europäisches Patentamt
European Patent Office
Office européen des brevets

(11) **EP 3 575 746 A1**

(12) **DEMANDE DE BREVET EUROPEEN**

(43) Date de publication:
**04.12.2019 Bulletin 2019/49**

(51) Int Cl.:
***G01C 23/00*** *(2006.01)* ***B64D 45/00*** *(2006.01)*

(21) Numéro de dépôt: **19169566.7**

(22) Date de dépôt: **16.04.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.05.2018 FR 1854623**

(71) Demandeur: **Airbus Opérations SAS 31060 Toulouse (FR)**

(72) Inventeurs:
• **PERRIN, Aymeric 31700 BLAGNAC (FR)**
• **GOUILLOU, Jérôme 31770 COLOMIERS (FR)**

(74) Mandataire: **Gevers & Orès Immeuble le Palatin 2 3 Cours du Triangle CS 80165 92939 Paris La Défense Cedex (FR)**

(54) **DISPOSITIF ET PROCÉDÉ D'INSENSIBILISATION À DES PANNES D'UN SYSTÈME D'AFFICHAGE**

(57) - Dispositif et procédé d'insensibilisation à des pannes d'un système d'affichage.
- Le dispositif d'insensibilisation (1) comprenant un module d'acquisition (3) des paramètres de vol courants de l'aéronef, un module de génération (4) d'une première image représentant une symbologie de vol comprenant au moins une ligne de référence de tangage nul, un module de génération (5) d'une deuxième image représentant une topographie d'un terrain survolé par l'aéronef, un module de génération (6) d'une troisième image (13) comprenant au moins deux parties séparées par une ligne de séparation, un module de génération (7) configuré pour générer une quatrième image en superposant dans l'ordre la première image, la deuxième image et la troisième image, la première image étant placée au premier plan et un module de transmission (8) configuré pour transmettre à un dispositif utilisateur (9), un signal représentatif de la quatrième image.

Fig. 2

EP 3 575 746 A1

Fig. 3

**Description**

DOMAINE TECHNIQUE

La présente invention concerne un dispositif et un procédé d'insensibilisation à des pannes d'un système d'affichage, en particulier d'un écran de vol principal configuré pour afficher une topographie synthétique en image d'arrière-plan d'une symbologie de vol et de navigation.

ÉTAT DE LA TECHNIQUE

Un écran de vol principal PFD (PFD pour « Primary Flight Display » en anglais) affiche généralement une image représentant une symbologie de vol et de navigation générée par un système de commande et d'affichage pouvant être dénommé, par exemple, système CDS (CDS pour « Control and Display System » en anglais) ou encore par un système d'instrument électronique EIS (EIS pour « Electronic Instrument System » en anglais). En parallèle, un système de vision synthétique SVS (SVS pour « Synthetic Vision System » en anglais) génère une image représentant une topologie du terrain survolé par l'aéronef. Cette dernière image est placée en arrière-plan de l'image représentant la symbologie de vol et de navigation. Cet affichage peut également être proposé sur une surface d'affichage de type affichage tête haute HUD (HUD pour « Head-Up display » en anglais). Cette surface correspond à une surface transparente située dans le champ de vision extérieur du pilote et sur laquelle des informations de vol sont affichées.

Cet affichage permet d'améliorer la conscience de la situation du pilote en ce qui concerne la position géographique de l'aéronef, la position de l'aéronef par rapport au terrain qu'il survole et la position relative de l'aéronef par rapport à une trajectoire d'approche en vue d'un atterrissage.

Toutefois, cet affichage pourrait être sujet à des pannes si, par exemple, les données de tangage ou les données d'altitude venaient à être corrompues (altérées) lors du traitement par le système SVS. Ces pannes pourraient avoir pour conséquence de décaler vers le bas ou vers le haut la topologie du terrain survolé à l'affichage.

Les documents US 2014/267422, FR 3 058 233, EP 2 413 101 et US 7 724 155 décrivent chacun un affichage qui affiche une image représentant une symbologie de vol et de navigation superposée à une image représentant une topographie du terrain survolé par l'aéronef. Toutefois aucun de ces documents ne permet de savoir si cet affichage est sujet à des pannes.

EXPOSÉ DE L'INVENTION

La présente invention a pour objet de pallier ces inconvénients en proposant un procédé et un dispositif d'insensibilisation à des pannes tout en limitant la charge du pilote si un décalage de la topologie se produit.

À cet effet, l'invention concerne un procédé d'insensibilisation à des pannes d'un système d'affichage d'un aéronef configuré pour afficher une représentation synthétique de terrain.

Selon l'invention, le procédé d'insensibilisation comprend les étapes suivantes :

- une étape d'acquisition, mise en oeuvre par un module d'acquisition, consistant à acquérir des données d'environnement et des paramètres de vol courants de l'aéronef dont au moins une attitude, une altitude, une position tridimensionnelle et un cap ;
- une première étape de génération, mise en oeuvre par un premier module de génération, consistant à générer une première image représentant une symbologie de vol comprenant au moins une ligne de référence de tangage nul, la première image indiquant un angle de tangage par rapport un angle de tangage nul de l'aéronef, la ligne de référence de tangage nul étant représentative de l'angle de tangage nul de l'aéronef, la première image étant générée à partir d'au moins l'attitude ;
- une deuxième étape de génération, mise en oeuvre par un deuxième module de génération, consistant à générer une deuxième image représentant une topographie d'un terrain survolé par l'aéronef à partir d'au moins l'attitude, le cap, la position tridimensionnelle et les données d'environnement ;
- une troisième étape de génération, mise en oeuvre par un troisième module de génération, consistant à générer une troisième image comprenant au moins deux parties séparées par une ligne de séparation déterminée à partir de l'attitude de l'aéronef, une première partie comportant des pixels présentant une valeur représentative d'une première gamme de couleur, une deuxième partie comportant des pixels présentant une valeur représentative d'une deuxième gamme de couleur ;
- une quatrième étape de génération, mise en oeuvre par un quatrième module de génération, consistant à générer une quatrième image en superposant dans l'ordre la première image, la deuxième image et la troisième image, la première image étant placée au premier plan, de telle façon que lorsque la topographie du terrain survolé représentée sur la deuxième image est décalée vers le bas du fait d'une panne, la deuxième partie de la troisième image est visible sur la quatrième image, mettant ainsi en évidence ladite panne ;

- une étape de transmission, mise en oeuvre par un module de transmission, consistant à transmettre à un dispositif utilisateur un signal représentatif de la quatrième image.

Ainsi, grâce à la troisième image générée par le troisième module de génération, une panne peut être mise en évidence par l'apparition de la deuxième partie de la troisième image sur l'affichage quand la topographie du terrain survolé est décalée vers le bas.

Selon une particularité, la deuxième étape de génération comprend les sous-étapes suivantes :

- une première sous-étape de détermination, mise en oeuvre par un premier sous-module de détermination, consistant à déterminer la topographie du terrain survolé par l'aéronef à partir d'au moins l'attitude, la position tridimensionnelle, le cap et les données d'environnement ;
- une première sous-étape d'attribution, mise en oeuvre par un premier sous-module d'attribution, consistant à attribuer au moins une valeur de pixel à un premier ensemble de pixels faisant partie de la deuxième image, la ou les valeurs de pixel étant représentatives de la topographie du terrain survolé par l'aéronef ;
- une deuxième sous-étape d'attribution, mise en oeuvre par un deuxième sous-module d'attribution, consistant à attribuer une valeur représentative d'un pixel transparent à un deuxième ensemble de pixels faisant partie de la deuxième image, le deuxième ensemble de pixels correspondant à un ensemble de la deuxième image dont les pixels n'appartiennent pas au premier ensemble de pixels.

Selon une autre particularité, la troisième étape de génération comprend les sous-étapes suivantes :

- une deuxième sous-étape de détermination, mise en oeuvre par un deuxième sous-module de détermination, consistant à déterminer une position de la ligne de séparation à partir de la ligne de référence de tangage nul, la ligne de séparation étant parallèle à la ligne de référence de tangage nul, la deuxième partie de la troisième image étant en correspondance au moins en partie avec la topographie du terrain survolé par l'aéronef représentée sur la deuxième image lorsque la première image, la deuxième image et la troisième image sont superposées dans la quatrième étape de génération ;
- une sous-étape d'ajout, mise en oeuvre par un module d'ajout, consistant à ajouter un élément indicatif d'une erreur sur la deuxième partie de la troisième image de façon à signaler explicitement ladite panne, cet élément indicatif étant visible sur la quatrième image lorsque la topographie du terrain survolé représentée sur la deuxième image est décalée vers le bas du fait de la panne.

Selon un premier mode de réalisation, la ligne de séparation est disposée à une position correspondant à un angle de tangage nul de l'aéronef ;
et en ce que l'élément indicatif est disposé à une distance correspondant à un angle de tangage par rapport à la ligne de séparation correspondant à un angle défini par la différence entre l'angle de tangage nul de l'aéronef et une ligne d'horizon naturel lorsque l'aéronef vole à une altitude maximale.

Selon un deuxième mode de réalisation, la ligne de séparation est disposée à un angle de tangage, par rapport à une position d'angle de tangage nul de l'aéronef, égal à la différence entre l'angle de tangage nul de l'aéronef et une ligne d'horizon naturel lorsque l'aéronef vole à une altitude maximale.

Selon un troisième mode de réalisation, la ligne de séparation est disposée à un angle de tangage, par rapport à une position de tangage nul de l'aéronef, qui est fonction de l'altitude de l'aéronef.

Selon un quatrième mode de réalisation, la ligne de séparation présente une épaisseur égale à un angle de tangage défini par la différence entre un angle de tangage nul de l'aéronef et une ligne d'horizon naturel lorsque l'aéronef vole à une altitude maximale, la ligne de séparation comprenant des pixels présentant un gradient de valeurs selon l'épaisseur entre, d'une part, une valeur égale à une valeur représentative de la première gamme de couleur pour une première rangée de pixels adjacents à la première partie de la troisième image et, d'autre part, une valeur égale à une valeur représentative de la deuxième gamme de couleur pour une deuxième rangée de pixels adjacents à la deuxième partie de la troisième image, la première rangée de pixels étant disposée à une position correspondant à l'angle de tangage nul de l'aéronef.

Selon un cinquième mode de réalisation, la ligne de séparation est disposée à un angle de tangage, par rapport à une position d'angle de tangage nul de l'aéronef, égal à la différence entre l'angle de tangage nul de l'aéronef et une ligne d'horizon, la ligne d'horizon étant déterminée à partir d'une distance prédéterminée définie par un champ de vision maximal de la topographie du terrain représentée sur la deuxième image, lorsque l'aéronef vole à une altitude maximale.

Selon un sixième mode de réalisation, la ligne de séparation est disposée à un angle de tangage, par rapport à une position de tangage nul de l'aéronef, fonction de l'altitude de l'aéronef et d'une distance prédéterminée définie par un champ de vision maximal de la topographie du terrain représentée sur la deuxième image.

Selon un septième mode de réalisation, la ligne de séparation présente une épaisseur égale à un angle de tangage défini par la différence entre une ligne d'horizon naturel et une ligne d'horizon qui est fonction d'une distance prédéterminée définie par un champ de vision maximal de la topographie du terrain représentée sur la deuxième image, la ligne de séparation comportant des pixels présentant une valeur représentative d'une troisième gamme de couleur, la ligne de séparation étant disposée à un angle de tangage, par rapport à une position de tangage nul de l'aéronef, égal à la différence entre l'angle de tangage nul et la ligne d'horizon naturel.

Selon un huitième mode de réalisation, la ligne de séparation est disposée à un angle de tangage, par rapport à une position de tangage nul de l'aéronef, qui est fonction, d'une part, de l'altitude de l'aéronef diminuée d'une altitude du terrain survolé par l'aéronef et, d'autre part, d'une distance prédéterminée définie par un champ de vision maximal de la topographie du terrain représentée sur la deuxième image.

De plus, si l'aéronef se présente dans une des situations suivantes :

- à l'approche finale d'une phase d'atterrissage,
- à une phase de décollage
- à une phase de remise des gaz,

alors l'altitude du terrain survolé est égale à une altitude du terrain survolé courante lors d'une des situations précédentes, sinon l'altitude du terrain survolé est supposée nulle.

Selon un neuvième et un dixième mode de réalisation, l'altitude de terrain survolé est égale à une altitude minimale du terrain survolé par l'aéronef comprise dans un secteur de cylindre, le cylindre étant centré sur l'aéronef, le secteur de cylindre présentant un rayon égal à la distance prédéterminée et présentant un angle d'ouverture du champ de vision maximal.

L'invention concerne aussi un dispositif d'insensibilisation à des pannes d'un système d'affichage d'un aéronef configuré pour afficher une représentation synthétique de terrain.

Selon l'invention, le dispositif comprend les modules suivants :

- un module d'acquisition configuré pour acquérir des données d'environnement et des paramètres de vol courants de l'aéronef dont au moins une attitude, une altitude, une position tridimensionnelle et un cap ;
- un premier module de génération configuré pour générer une première image représentant une symbologie de vol comprenant au moins une ligne de référence de tangage nul, la première image indiquant un angle de tangage par rapport un angle de tangage nul de l'aéronef, la ligne de référence de tangage nul étant représentative de l'angle de tangage nul de l'aéronef, la première image étant générée à partir d'au moins l'attitude et l'altitude ;
- un deuxième module de génération configuré pour générer une deuxième image représentant une topographie d'un terrain survolé par l'aéronef à partir d'au moins l'attitude, le cap, la position tridimensionnelle et les données d'environnement ;
- un troisième module de génération configuré pour générer une troisième image comprenant au moins deux parties séparées par une ligne de séparation déterminée à partir de l'attitude de l'aéronef, une première partie comportant des pixels présentant une valeur représentative d'une première gamme de couleur, une deuxième partie comportant des pixels présentant une valeur représentative d'une deuxième gamme de couleur ;
- un quatrième module de génération configuré pour générer une quatrième image en superposant dans l'ordre la première image, la deuxième image et la troisième image, la première image étant placée au premier plan, de telle façon que lorsque la topographie du terrain survolé représentée sur la deuxième image est décalée vers le bas du fait d'une panne, la deuxième partie de la troisième image est visible sur la quatrième image, mettant ainsi en évidence ladite panne ;
- un module de transmission configuré pour transmettre à un dispositif utilisateur, un signal représentatif de la quatrième image.

L'invention concerne également un aéronef, en particulier un avion de transport, qui comporte un dispositif d'insensibilisation à des pannes tel que spécifié ci-dessus.

BRÈVE DESCRIPTION DES FIGURES

L'invention, avec ses caractéristiques et avantages, ressortira plus clairement à la lecture de la description faite en référence aux dessins annexés dans lesquels :

- la figure 1 représente schématiquement un mode de réalisation du dispositif d'insensibilisation à des pannes,
- la figure 2 représente schématiquement un mode de réalisation du procédé d'insensibilisation à des pannes,
- la figure 3 représente une image affichée sur un dispositif d'affichage après la superposition des première, deuxième et troisième images,

- la figure 4 représente une vue de profil d'un aéronef volant à basse altitude ainsi qu'un affichage comprenant la superposition de la première et la deuxième image,
- la figure 5 représente une vue de profil d'un aéronef volant à haute altitude ainsi qu'un affichage comprenant la superposition de la première et la deuxième image,
- la figure 6 représente une vue de profil d'un aéronef dont la visibilité du système SVS est limitée ainsi qu'un affichage comprenant la superposition de la première et la deuxième image,
- la figure 7 représente une vue de profil d'un aéronef, dont la visibilité du système SVS est limitée, volant au-dessus d'un terrain présentant une altitude non nulle ainsi qu'un affichage comprenant la superposition de la première et la deuxième image,
- la figure 8 représente, à gauche, une première image représentant une symbologie et, à droite, une troisième image selon des modes de réalisation,
- la figure 9 représente, à gauche, une première image représentant une symbologie et, à droite, une troisième image selon un autre mode de réalisation,
- la figure 10 représente, à gauche, une première image représentant une symbologie et, à droite, une troisième image selon un autre mode de réalisation,
- la figure 11 représente, à gauche, une première image représentant une symbologie et, à droite, une troisième image selon un autre mode de réalisation,
- la figure 12 représente la quatrième image lorsqu'une panne se produit,
- la figure 13 représente en perspective un aéronef survolant un terrain présentant une altitude non nulle et un secteur de cylindre représentatif du champ de vision du système SVS,
- la figure 14 représente une coupe du secteur de cylindre en sous-secteurs,
- la figure 15 représente une vue de profil d'un aéronef survolant un terrain d'altitude non nulle ainsi que les points le long de la distance prédéterminée du champ de vision maximal pour lesquels les angles de terrain apparents sont déterminés,
- la figure 16 représente une vue en perspective d'un aéronef survolant un terrain d'altitude non nulle afin de déterminer un angle de terrain apparent pour un sous-secteur de cylindre et un point,
- la figure 17 représente, à gauche, une première image représentant les angles de terrain apparents pour un sous-secteur, à droite, une troisième image générée à partir du minimum d'angle de terrain apparent,
- la figure 18 représente le positionnement d'un élément indicatif selon une variante,
- la figure 19 représente le positionnement d'un élément indicatif selon une autre variante.

## DESCRIPTION DÉTAILLÉE

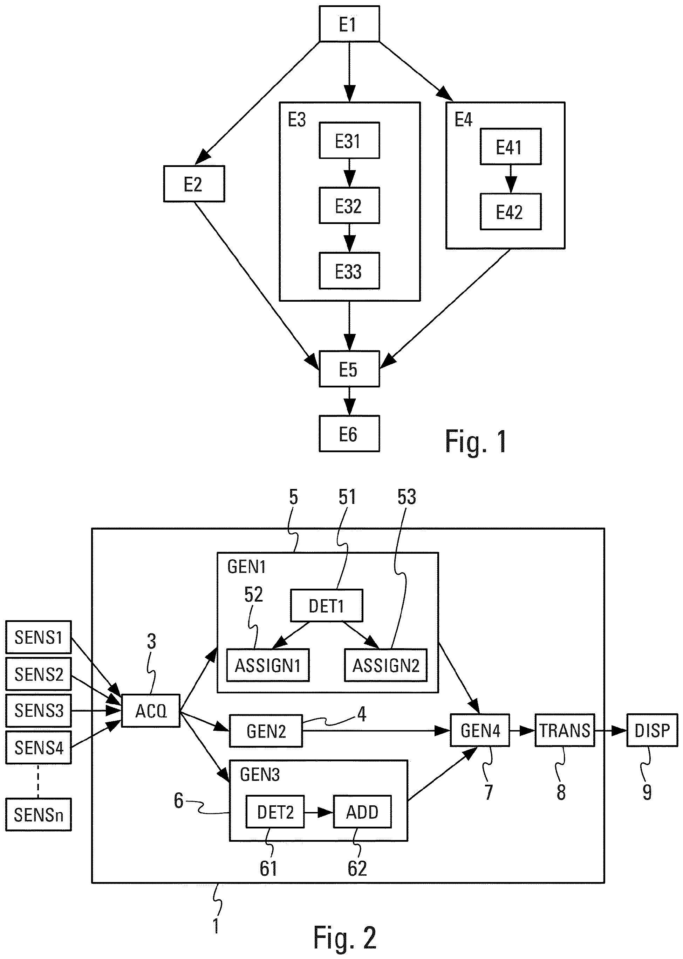

La figure 2 représente un mode de réalisation du dispositif de d'insensibilisation 1 à des pannes d'un système d'affichage DISP (DISP pour « display system » en anglais) 9 d'un aéronef AC. Dans la suite de la description, le dispositif d'insensibilisation 1 à des pannes d'un système d'affichage sera appelé : dispositif d'insensibilisation.

Le système d'affichage 9 est configuré pour afficher une représentation synthétique de terrain. Le système d'affichage 9 peut correspondre à un écran de vol principal PFD ou une surface d'affichage tête haute HUD.

Le dispositif d'insensibilisation 1, embarqué sur l'aéronef AC, comprend un module d'acquisition ACQ (ACQ pour « module for acquiring » en anglais) 3 configuré pour acquérir des paramètres de vol courants de l'aéronef AC et des données d'environnement.

Le module d'acquisition 3 acquiert les paramètres de vol mesurés par des capteurs SENS1, SENS2, SENS3, SENS4, ..., SENSn (SENS pour « sensor » en anglais) 2. Le module d'acquisition 3 acquiert au moins une attitude courante de l'aéronef AC, une altitude courante de l'aéronef, une position tridimensionnelle courante de l'aéronef, un cap courant de l'aéronef AC et des données d'environnement courants. Les données d'environnement correspondent, par exemple, à des données concernant le terrain survolé, des données concernant une ou plusieurs pistes d'atterrissage ou des données concernant des obstacles susceptibles d'être rencontrés par l'aéronef AC.

Le dispositif d'insensibilisation 1 comprend également un module de génération 4 GEN2 (GEN pour « module for generating » en anglais) configuré pour générer une image I1 représentant une symbologie de vol. La symbologie de vol comprend au moins une ligne de référence de tangage nul 10 (« reference zéro pitch line » en anglais). Cette deuxième image I1 indiquant un angle de tangage par rapport un angle de tangage nul de l'aéronef AC. La ligne de référence de tangage nul 10 est représentative de l'angle de tangage nul de l'aéronef AC. Ainsi, une distance entre une ligne d'horizon et la ligne de référence de tangage nul 10 est représentative d'un angle de tangage par rapport à l'angle de tangage nul de l'aéronef AC. L'image I1 est générée à partir à partir des paramètres de vol courant qui correspondent au moins à l'attitude courante de l'aéronef AC. L'image I1 comprend un ensemble de pixels. Les pixels représentatifs de la symbologie présentent des valeurs représentatives de couleurs affichées sur l'image I1. Les autres pixels de l'ensemble de pixels présentent une valeur représentative d'un pixel transparent (sans couleur). Le module de génération 4 peut être compris dans un système CDS/EIS.

Le dispositif d'insensibilisation 1 comprend en outre un module de génération GEN1 5 configuré pour générer une image I2 représentant une topographie d'un terrain survolé 15 par l'aéronef AC. La topographie est générée à partir de paramètres de vol courants qui correspondent au moins à l'attitude de l'aéronef AC, le cap de l'aéronef AC, la position tridimensionnelle de l'aéronef AC et des données d'environnement. Les données d'environnement permettent de connaître les différents éléments compris dans la topographie du terrain survolé 15. L'attitude, le cap et la position tridimensionnelle permettent de représenter la topographie déterminée à partir des données d'environnement selon le point de vue du pilote. L'image I2 représente donc la topographie du terrain survolé avec le ciel. La topographie du terrain survolé et le ciel sont séparés par l'horizon 18. Le module de génération 5 peut être compris dans un système SVS.

Par exemple, pour un écran de vol principal PFD, le ciel est représenté par un ensemble de couleurs bleues et la topographie du terrain est représentée par un ensemble de couleurs vertes, marron et/ou blanches.

Par exemple, pour une surface d'affichage tête haute HUD, le ciel est transparent et la topographie du terrain est monochrome. La topographie du terrain peut être de couleur verte.

Ainsi, lorsque l'image I1 est superposée sur l'image I2, la topographie est représentée en arrière-plan de la symbologie.

Le dispositif d'insensibilisation 1 comprend aussi un module de génération GEN3 6 configuré pour générer une image I3 comprenant au moins deux parties séparées par une ligne de séparation 11 déterminée à partir de l'attitude de l'aéronef AC, en particulier d'un angle de roulis et d'un angle de tangage de l'aéronef AC. Une partie 13 comporte des pixels présentant une valeur représentative d'une première gamme de couleur et une partie 14 comporte des pixels présentant une valeur représentative d'une deuxième gamme de couleur.

Une gamme de couleur peut correspondre à une couleur unique ou à un ensemble de couleurs.

Par exemple, pour un écran de vol principal PFD, la première gamme de couleur correspond à une couleur bleue afin que la partie 13 présente une couleur proche de la couleur du ciel. La deuxième gamme de couleur correspond à une couleur marron afin que la partie 14 présente une couleur proche de la couleur de la topographie du terrain.

Selon un autre exemple, pour un écran de vol principal PFD, la première gamme de couleur correspond un ensemble de couleurs représentatif d'un ciel, tel qu'un dégradé de bleu. La deuxième gamme de couleur correspond à un ensemble de couleurs représentatif de la topographie du terrain, tel qu'un ensemble de couleurs marron.

Selon un exemple, pour la surface d'affichage tête haute, la deuxième gamme de couleur correspond à un ensemble de couleurs vertes.

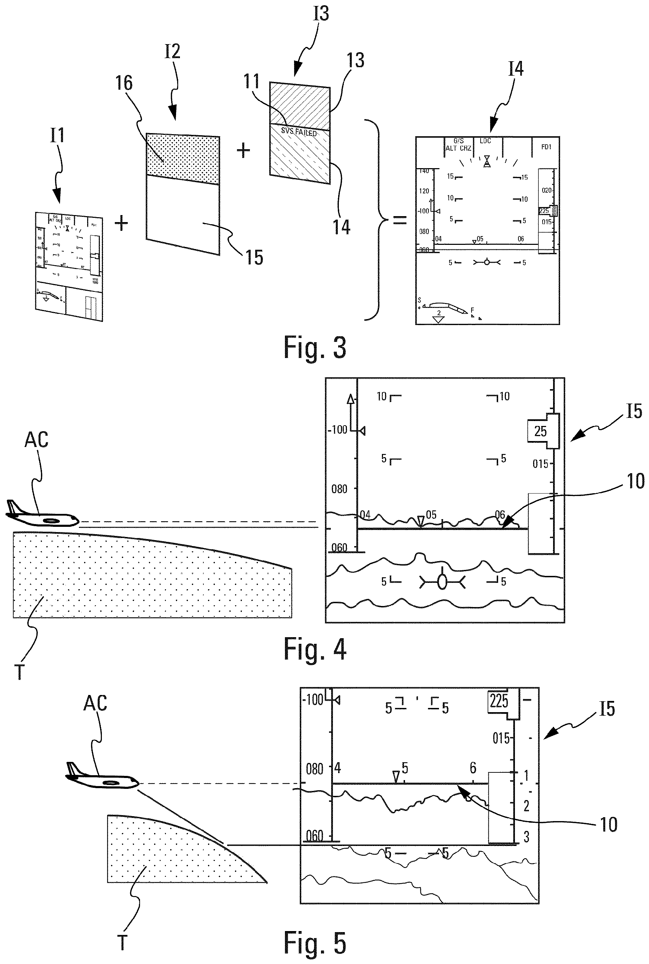

Un module de génération GEN4 7, faisant partie du dispositif d'insensibilisation 1, est configuré pour générer une image I4 en superposant, dans l'ordre, l'image I1, l'image I2 et l'image I3 (figure 3). L'image I1 est placée au premier plan. Avantageusement, les images I1, I2, I3 et I4 présentent les mêmes dimensions en pixels afin qu'elles soient directement superposables.

Un module de transmission TRANS (TRANS pour « module for transmitting » en anglais) 8, faisant partie du dispositif d'insensibilisation 1, est configuré pour transmettre à un dispositif utilisateur 9, tel que le système d'affichage, un signal représentatif de l'image I4.

De manière avantageuse, le module de génération 5 comprend un sous-module de détermination DET1 (DET pour « module for determining » en anglais) 51 configuré pour déterminer la topographie du terrain survolé par l'aéronef AC à partir d'au moins l'attitude, la position tridimensionnelle, le cap et les données d'environnement.

Un sous-module d'attribution ASSIGN1 (ASSIGN pour « module for assigning » en anglais) 52, qui fait partie du module de génération 5, est configuré pour attribuer au moins une valeur de pixel à un ensemble de pixels faisant partie de l'image I2 (figure 3). La ou les valeurs de pixel attribuées à l'ensemble de pixels sont représentatives de la topographie du terrain survolé 15 par l'aéronef AC. La première gamme de couleur de la partie 13 de l'image I3 correspond à une ou plusieurs couleurs proches de la ou des couleurs de la topographie de l'image I2.

Un sous-module d'attribution ASSIGN2 53, qui fait partie du dispositif d'insensibilisation 1, est configuré pour attribuer une valeur représentative d'un pixel transparent à un ensemble de pixels 16 faisant partie de l'image I2. L'ensemble de pixels 16 correspond à un ensemble de l'image I2 dont les pixels n'appartiennent pas à l'ensemble de pixels 15.

Ainsi, grâce à la transparence de ces pixels de l'ensemble de pixels 16, l'image I3 peut apparaître en arrière-plan des images I1 et I2 superposées. Seule la portion de l'image I3 qui est en correspondance avec l'ensemble de pixels 16 de l'image I2 apparaissent grâce à la transparence des pixels de l'ensemble de pixels 16. Selon la taille de l'ensemble de pixels 16, au moins une portion de la partie 13 et éventuellement la partie 14 apparaissent.

Le module de génération 6 peut comprendre un sous-module de détermination DET2 61 configuré pour déterminer une position de la ligne de séparation 11 à partir de l'attitude de l'aéronef AC. La ligne de séparation 11 est parallèle à la ligne de référence de tangage nul 10 quand toutes les images I1, I2, et I3 sont superposées. La partie 14 de l'image I3 est en correspondance au moins en partie avec la topographie du terrain survolé 15 par l'aéronef AC représentée sur la deuxième image I2, lorsque l'image I1, l'image I2 et l'image I3 sont superposées par le module de génération 7.

Selon une variante de réalisation, le sous-module de détermination 61 peut être compris dans le système CDS/EIS.

Selon une autre variante de réalisation, le sous-module de détermination 61 peut être compris dans un autre système que le système CDS et le système EIS, ayant une intégrité comparable.

Un module d'ajout ADD (ADD pour « module for adding » en anglais) 62, faisant partie du module de génération 6, est configuré pour ajouter un élément indicatif 12 d'une erreur sur la partie 14 de l'image I3. L'élément indicatif peut correspondre à un sigle, une figure, un texte ou tout autre élément représentatif d'une erreur. Par exemple, l'élément indicatif correspond à un texte tel que « SVS FAILED » (« système SVS défaillant » en anglais).

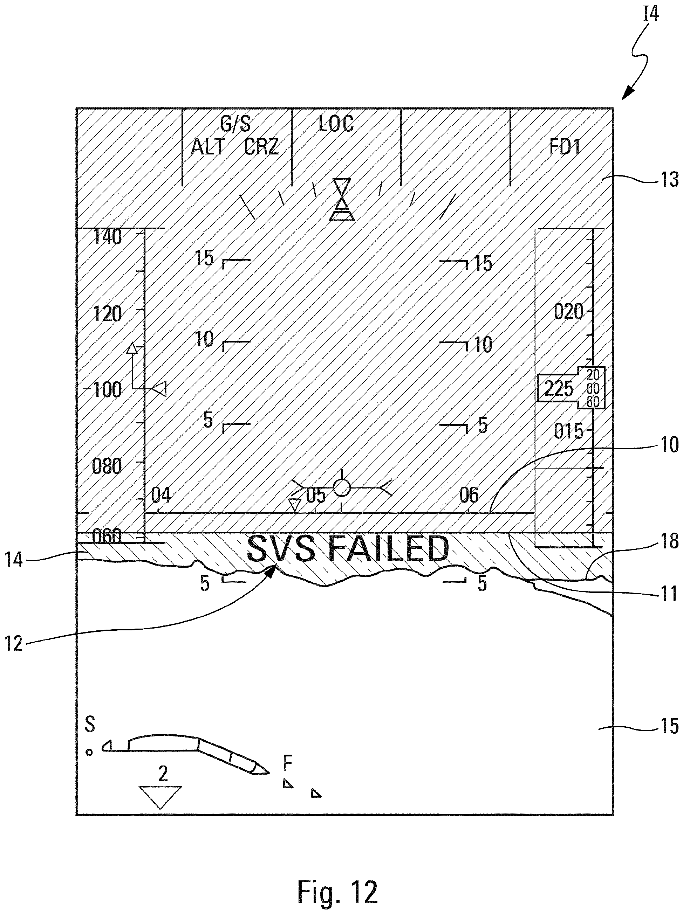

Ainsi, lorsque la topologie (ou topographie) du terrain survolé 15 à l'affichage est décalée vers le bas à cause de données corrompues, l'élément indicatif 12 apparaît, indiquant une panne sur le traitement de certaines données par le module de génération 5 telles que les données de tangage et d'altitude (figure 12). Lorsque la topologie du terrain survolé 15 n'est pas décalé, l'élément indicatif 12 est caché par la topologie du terrain survolé 15 comprise de l'image I2.

La figure 4 représente un aéronef AC survolant un terrain à basse altitude et une image I5 susceptible d'être affichée sur un système d'affichage ne disposant pas du dispositif d'insensibilisation 1 pour cet aéronef AC. La figure 5 représente un aéronef AC survolant un terrain à haute altitude et l'image I5 susceptible d'être affichée sur un système d'affichage pour cet aéronef AC. Du fait de la rotondité de la Terre T, si la ligne de séparation 11 est disposée à une position correspondant à un angle de tangage nul, l'élément indicatif 12 peut apparaître alors qu'il n'existe pas de pannes.

Les quatre modes de réalisation suivants présentent des solutions pour s'affranchir de la rotondité de la Terre T.

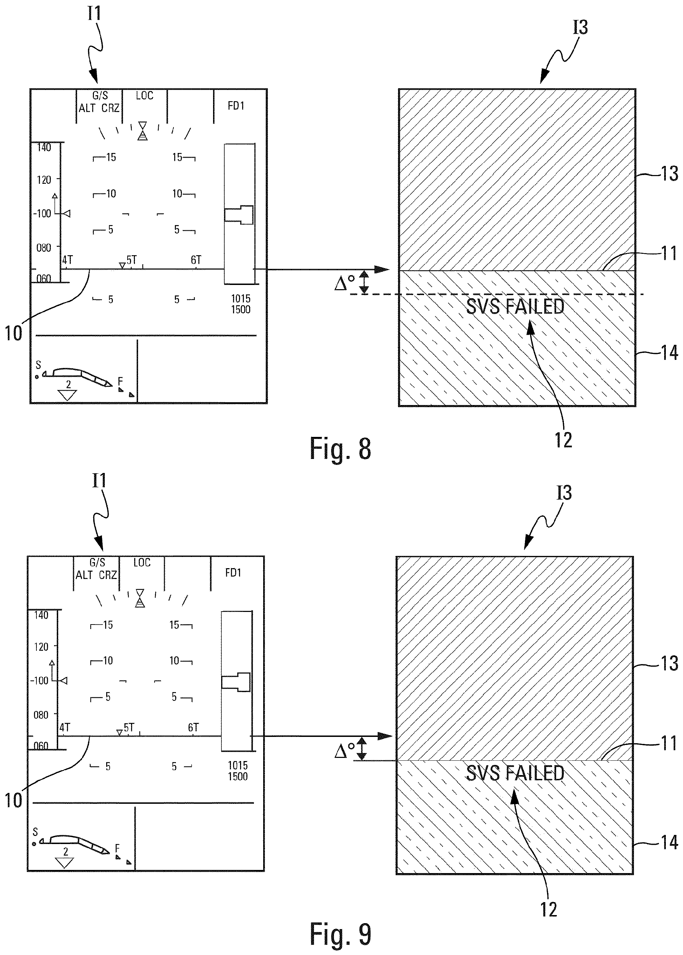

Selon un premier mode de réalisation (figure 8), la ligne de séparation 11 est disposée à une position correspondant à un angle de tangage nul de l'aéronef AC. En revanche, l'élément indicatif 12 est disposé à une distance correspondant à un angle de tangage $\Delta^0$ par rapport à la ligne de séparation 11 correspondant à un angle défini par la différence entre l'angle de tangage nul de l'aéronef AC et une ligne d'horizon naturel lorsque l'aéronef AC vole à une altitude maximale. L'horizon naturel correspond à l'horizon visible de l'aéronef à une altitude donnée.

Par exemple, l'équation suivante permet d'obtenir l'angle de tangage $\Delta^0$ en fonction de l'altitude de l'aéronef AC en tenant compte de la rotondité de la Terre T :

$$\Delta^0 = \arctan\left(\frac{0,3048 \times \sqrt{Altitude_{feet}}}{1,23 \times 1852}\right),$$

dans laquelle $Altitude_{feet}$ est l'altitude de l'aéronef AC en pieds (1 pied est égal à 0,305 m environ).

Ainsi, si on considère que l'altitude maximale de l'aéronef AC est de 50 000 pieds (15 240 m environ), l'angle de tangage $\Delta^0$ est égal à 1,71°. L'élément indicatif 12 est donc placé à une distance sous la ligne de séparation 11 correspondant à un angle de tangage $\Delta^0$ de 1,71°.

Selon un deuxième mode de réalisation, la ligne de séparation 11 est disposée à un angle de tangage $\Delta^0$, par rapport à une position de tangage nul de l'aéronef AC. L'angle de tangage $\Delta^0$ est égal à la différence entre l'angle de tangage nul de l'aéronef (AC) et une ligne d'horizon naturel lorsque l'aéronef (AC) vole à une altitude maximale de l'aéronef AC. Ainsi, l'angle de tangage $\Delta^0$ est tel que la ligne de séparation 11 représente est positionnée à la position de l'horizon naturel lorsque l'aéronef AC vole à une altitude maximale. L'angle de tangage permettant de positionner la ligne de séparation 11 peut être déterminé par l'équation décrite dans le premier mode de réalisation.

Dans ce mode de réalisation, l'élément indicatif 12 peut être « collé » sous la ligne de séparation 11. Par exemple, l'élément indicatif 12 peut être disposé à une distance comprise entre un et cinq pixels de la ligne de séparation 11.

Selon un troisième mode de réalisation, la ligne de séparation 11 est disposée à un angle de tangage $\Delta^0$, par rapport à une position de tangage nul de l'aéronef AC, qui est fonction de l'altitude de l'aéronef AC.

Dans ce mode de réalisation, la position de la ligne de séparation 11 est dynamique et change selon l'altitude de l'aéronef AC. L'équation permettant de déterminer la position de la ligne de séparation peut être la même équation que celle décrite dans le premier mode de réalisation dans laquelle l'altitude $Altitude_{feet}$ de l'aéronef AC est variable. D'autres équations peuvent être utilisées. Par exemple, d'autres équations peuvent tenir compte du rayon de la Terre T ou des effets de diffraction atmosphérique. L'élément indicatif 12 peut être « collé » sous la ligne de séparation 11. Par exemple, l'élément indicatif 12 peut être disposé à une distance comprise entre un et cinq pixels de la ligne de séparation 11.

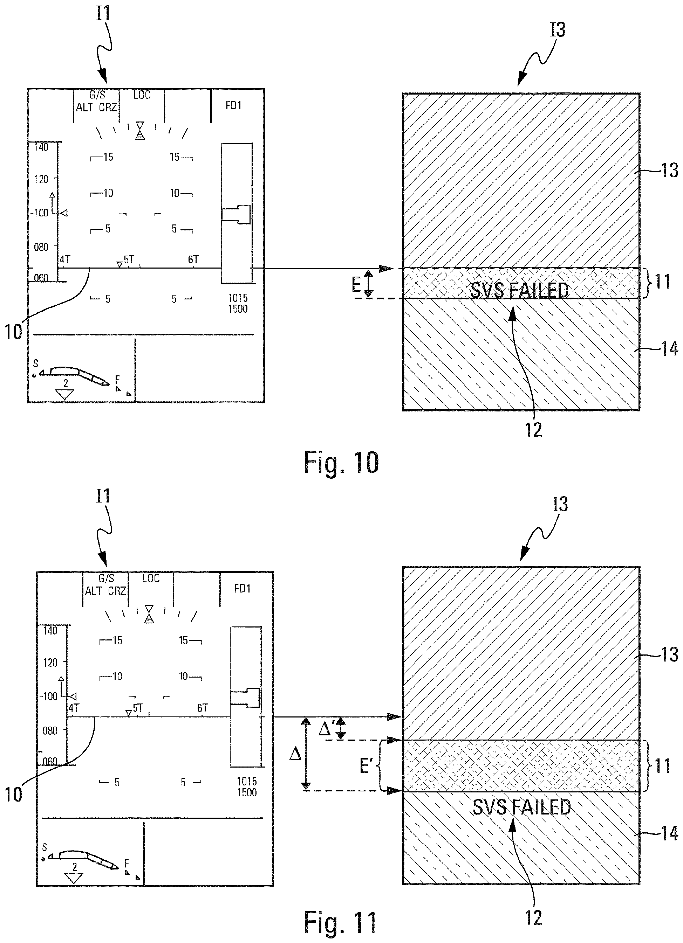

Selon un quatrième mode de réalisation (figure 10), la ligne de séparation 11 présente une épaisseur E égale à un angle de tangage défini par la différence entre un angle de tangage nul de l'aéronef AC et l'horizon naturel lorsque l'aéronef AC vole à une altitude maximale. La ligne de séparation 11 comprend des pixels présentant un gradient de valeurs selon l'épaisseur E entre, d'une part, une valeur égale à une valeur représentative de la première gamme de couleur pour une première rangée de pixels adjacents à la partie 13 de l'image I3 et, d'autre part, une valeur égale à une valeur représentative de la deuxième gamme de couleur pour une deuxième rangée de pixels adjacents à la partie 14 de l'image I3. La première rangée de pixels est disposée à une position correspondant à l'angle de tangage nul de l'aéronef AC.

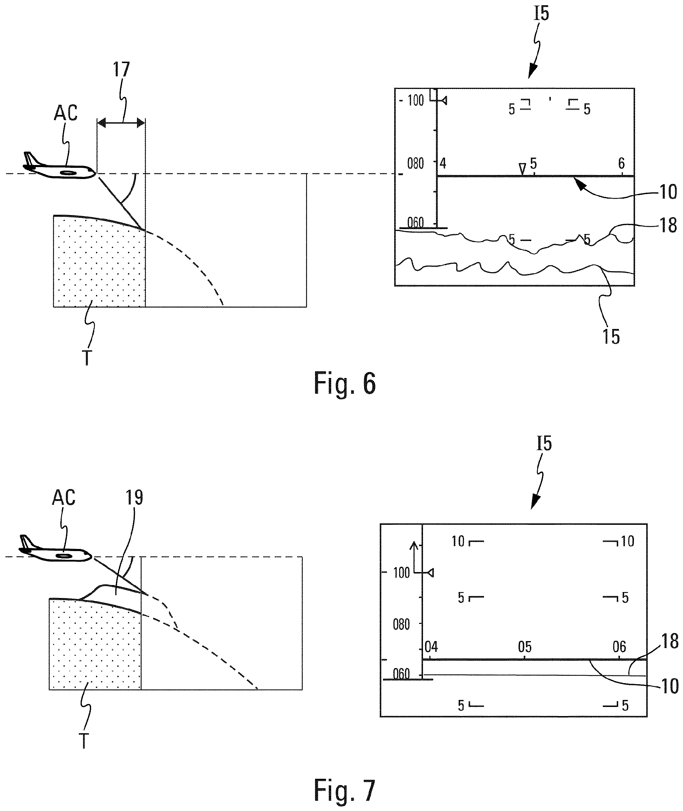

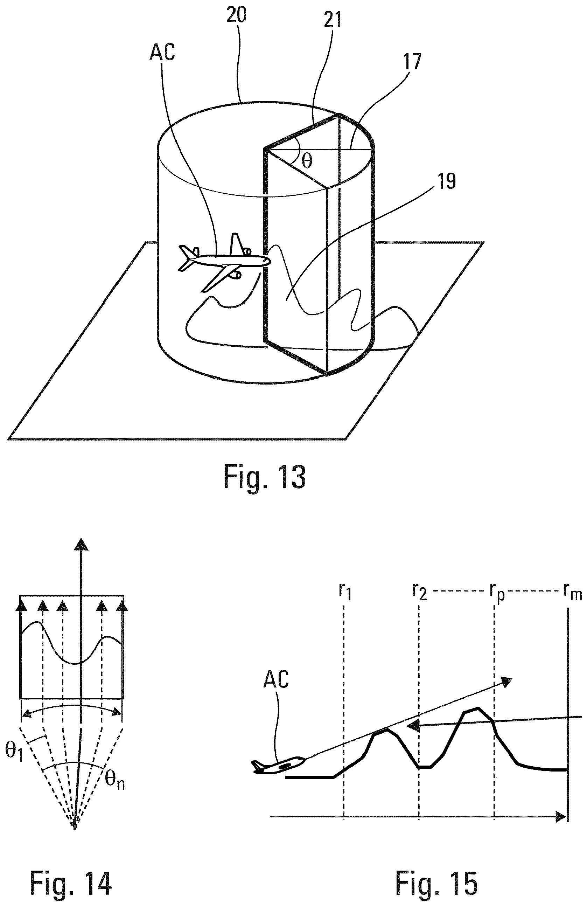

En plus de la rotondité de la Terre T, il peut être utile de tenir compte également de la limitation du champ de vision 21 (figure 13) due au système SVS. La figure 6 représente un aéronef AC survolant un terrain et l'image I5 susceptible d'être affichée sur un système d'affichage pour cet aéronef AC. Du fait de la limitation du champ de vision 21 due au système SVS, l'horizon 18 de la topographie 15 est décalé vers le bas. L'élément indicatif 12 est donc susceptible d'être découvert, puisque la topographie du terrain affichée 15 est trop basse pour cacher l'élément indicatif 12, alors qu'il n'existe pas de pannes.

Les trois modes de réalisation suivants présentent des solutions pour s'affranchir de la rotondité de la Terre T et de la limitation du champ de vision 21 du système SVS.

Selon un cinquième mode de réalisation (figure 9), la ligne de séparation 11 est disposée à un angle de tangage $\Delta^0$, par rapport à une position d'angle de tangage nul de l'aéronef AC, égal à la différence entre l'angle de tangage nul de l'aéronef AC et une ligne d'horizon. Cette ligne d'horizon est déterminée à partir d'une distance prédéterminée 17 définie par le champ de vision 21 maximal de la topographie du terrain 15 représentée sur l'image I2. Cet angle de tangage $\Delta^0$ est déterminé lorsque l'aéronef AC vole à une altitude maximale. La distance prédéterminée 17 correspond à la distance maximale de visibilité vers l'avant de l'aéronef AC limitée par le champ de vision 21 dû au système SVS.

Dans ce mode de réalisation, l'élément indicatif 12 peut être « collé » sous la ligne de séparation 11. Par exemple, l'élément indicatif 12 peut être disposé à une distance comprise entre un et cinq pixels de la ligne de séparation 11.

Par exemple, l'équation suivante permet d'obtenir l'angle de tangage $\Delta^0$ en fonction de l'altitude de l'aéronef AC en tenant compte de la rotondité de la Terre T et de la limitation du champ de vision 21 :

$$\Delta^0\big(Altitude_{feet}, SVSrange_{NM}\big) =$$

$$\begin{cases} \text{Arctan}\left(\frac{A \times Altitude_{feet}}{SVSrange_{NM} \times B}\right), & Altitude_{feet} \in \left]0 \, ; \left(\frac{SVSrange_{NM}}{C}\right)^2\right] \\ \text{Arctan}\left(\frac{\sqrt{Altitude_{feet}}}{C \times B}\right), & Altitude_{feet} \in \left]\left(\frac{SVSrange_{NM}}{C}\right)^2 \, ; \, +\infty\right[ \end{cases},$$

dans laquelle :

- $Altitude_{feet}$ est l'altitude de l'aéronef AC en pied (1 pied est égal à 0,305 m environ),
- $SVSrange_{NM}$ est la distance prédéterminée 17 en mile nautique,
- $A$, $B$ et $C$ sont des constantes.

De façon non limitative, la constante $A$ est égale à 0,3048, la constante $B$ est égale à 1852 et la constante $C$ est égale à 1,23.

L'équation correspond donc à une fonction par partie. pour une altitude $Altitude_{feet}$ supérieure à une altitude prédéterminée maximale $\left(\frac{SVSrange_{NM}}{C}\right)^2$, l'angle de tangage $\Delta^0$ est fonction de l'altitude $Altitude_{feet}$ de l'aéronef AC et de la distance prédéterminée 17. Pour une altitude inférieure à l'altitude prédéterminée maximale $\left(\frac{SVSrange_{NM}}{C}\right)^2$, l'angle de tangage $\Delta^0$ est fonction de l'altitude $Altitude_{feet}$ de l'aéronef AC seulement.

Ainsi, si on considère que l'altitude maximale de l'aéronef AC est égale à 50 000 pieds (15 240 m environ) et que la distance prédéterminée 17 est égale à 50 NM (92,6 km environ), l'angle de tangage $\Delta^0$ est égal à 9,35°. La ligne de séparation 11 est disposée à un angle de tangage $\Delta^0$ de 9,35° par rapport à un angle de tangage nul.

Selon un sixième mode de réalisation (figure 9), la ligne de séparation 11 est disposée à un angle de tangage $\Delta_0$, par rapport à une position de tangage nul de l'aéronef AC, qui est fonction de l'altitude de l'aéronef AC et de la distance prédéterminée 17.

Dans ce mode de réalisation, la position de la ligne de séparation 11 est dynamique et change selon l'altitude de l'aéronef AC. L'équation permettant de déterminer la position de la ligne de séparation peut être la même équation que celle décrite dans le cinquième mode de réalisation dans laquelle l'altitude $Altitude_{feet}$ de l'aéronef AC est variable. D'autres équations peuvent être utilisées. L'élément indicatif 12 peut être « collé » sous la ligne de séparation 11. Par exemple, l'élément indicatif 12 peut être disposé à une distance comprise entre un et cinq pixels de la ligne de séparation 11.

Selon un septième mode de réalisation (figure 11), la ligne de séparation 11 présente une épaisseur E' égale à un angle de tangage défini par la différence entre une ligne d'horizon naturel et une ligne d'horizon qui est fonction de la distance prédéterminée 17. La ligne d'horizon naturel correspond à une ligne d'horizon sans limitation du champ de vision. La ligne de séparation 11 comporte des pixels présentant une valeur représentative d'une troisième gamme de couleur. La ligne de séparation 11 est disposée à un angle de tangage ∆', par rapport à une position de tangage nul de l'aéronef AC, égal à la différence entre l'angle de tangage nul et la ligne d'horizon naturel.

Selon une première variante, la position de la ligne d'horizon qui est fonction de la distance prédéterminée 17 est déterminée à partir d'une distance maximale définie par un champ de vision maximal de la topographie du terrain représentée sur la deuxième image, lorsque l'aéronef AC vole à une altitude maximale. Ainsi, la position de la ligne d'horizon qui est fonction de la distance prédéterminée 17 peut être déterminée par la même équation que celle décrite dans le cinquième mode de réalisation dans laquelle l'altitude $Altitude_{feet}$ correspond à l'altitude maximale de l'aéronef AC.

Selon une deuxième variante, la position de la ligne d'horizon qui est fonction de la distance prédéterminée 17 est déterminée à partir d'une distance maximale définie par un champ de vision maximal de la topographie du terrain représentée sur la deuxième image, en fonction de l'altitude courante de l'aéronef AC. Ainsi, la position de la ligne d'horizon peut être déterminée par la même équation que celle décrite dans le cinquième mode de réalisation dans laquelle l'altitude $Altitude_{feet}$ est variable.

L'angle de tangage ∆' est fonction de l'altitude de l'aéronef AC et peut avoir pour fonction :

$$\Delta'\left(Altitude_{feet}\right) = arctan\left(\frac{\sqrt{Altitude_{feet}}}{1,23 \times 1852}\right).$$

Dans ce mode de réalisation, l'élément indicatif 12 peut être « collé » sous la ligne de séparation 11. Par exemple, l'élément indicatif 12 peut être disposé à une distance comprise entre un et cinq pixels de la ligne de séparation 11.Les modes de réalisation décrits ci-avant déterminent des angles de tangage ∆⁰ et ∆ pour un terrain survolé (ou autrement dit, un terrain autour de l'aéronef AC) présentant une altitude nulle. Les modes de réalisation suivants déterminent l'angle de tangage ∆⁰ en tenant compte de l'altitude du terrain autour de l'aéronef AC. La figure 7 représente un aéronef AC survolant un terrain et l'image I5 susceptible d'être affichée sur un système d'affichage pour cet aéronef AC. Sur cette figure 7, le terrain autour de l'aéronef AC présente une élévation 19 qui fait que l'altitude du terrain autour de l'aéronef AC n'est pas nulle. Dans le cas de la figure 7, la ligne d'horizon qui est fonction de la distance prédéterminée 17 est surélevée par rapport à la ligne de séparation 11 car les modes de réalisation déterminant la position de la ligne de séparation 11 considèrent que l'altitude du terrain autour de l'aéronef AC est nulle.

Les modes de réalisation suivants présentent des solutions pour s'affranchir de la rotondité de la Terre T et de la limitation du champ de vision 21 du système SVS en tenant compte de l'altitude du terrain autour de l'aéronef AC.

Selon un huitième mode de réalisation, la ligne de séparation 11 est disposée à un angle de tangage ∆⁰, par rapport à une position de tangage nul de l'aéronef AC, qui est fonction, d'une part, de l'altitude de l'aéronef $Zaircraft_{feet}$ diminuée d'une altitude du terrain survolé $Zterrain_{feet}$ par l'aéronef AC et, d'autre part, de la distance prédéterminée 17.

Par exemple, l'équation suivante permet d'obtenir l'angle de tangage ∆⁰ en fonction de l'altitude de l'aéronef AC en tenant compte de la rotondité de la Terre T, de la limitation du champ de vision 21 et de l'altitude du terrain :

$$\Delta^0\left(Zaircraft_{feet}, Zterrain_{feet}, SVSrange_{NM}\right)$$
$$= \begin{cases} Arctan\left(\dfrac{A \times \left(Zaircraft_{feet} - Zterrain_{feet}\right)}{SVSrange_{NM} \times B}\right) & (1) \\ Arctan\left(\dfrac{Zaircraft_{feet} - Zterrain_{feet}}{C \times B}\right) & (2) \end{cases}$$

dans laquelle :

- $Zaircraft_{feet}$ est l'altitude courante de l'aéronef AC en pied,
- $Zterrain_{feet}$ est l'altitude du terrain autour de l'aéronef AC en pied et
- $SVSrange_{NM}$ est la distance prédéterminée 17 définie par le champ de vision 21 maximal en mile nautique,
- $A$, $B$ et $C$ sont des constantes.

L'équation (1) est appliquée quand :

$$SVSrange_{NM} \in \,]0 \,;\, 1{,}23\sqrt{Zaircraft_{feet} - Zterrain_{feet}}].$$

L'équation (2) est appliquée quand :

$$SVSrange_{NM} \in \,]1{,}23\sqrt{Zaircraft_{feet} - Zterrain_{feet}} \,;\, +\infty[.$$

De façon non limitative, la constante A est égale à 0,3048, la constante B est égale à 1852 et la constante C est égale à 1,23.

De préférence, ce mode de réalisation est mise en oeuvre lorsque l'aéronef AC est proche du sol.

Par conséquent, selon une variante de réalisation, si l'aéronef AC se présente dans une des situations suivantes :

- à l'approche finale d'une phase d'atterrissage,
- à une phase de décollage
- à une phase de remise des gaz,

alors l'altitude du terrain survolé est égale à une altitude du terrain survolé courante lors d'une des situations précédentes. Par exemple, l'altitude du terrain est fixée à l'altitude d'une piste d'atterrissage sur lequel l'aéronef AC atterrit, décolle ou effectue une remise des gaz.

Ainsi, en reprenant l'équation précédente, l'angle de tangage $\Delta^0$ de la ligne de séparation 11 est déterminé en remplaçant l'altitude du terrain autour de l'aéronef AC $Zterrain_{feet}$ par l'altitude de la piste d'atterrissage.

Lorsque l'aéronef AC ne se présente pas sous l'une des situations précédentes, le dispositif d'insensibilisation est mis en oeuvre selon les modes de réalisation précédentes dans lesquels l'altitude du terrain survolé est supposée nulle.

La situation dans laquelle se présente l'aéronef AC peut être déterminée à partir de l'altitude de l'aéronef AC mesurée par un altimètre, de données représentatives de la phase de vol de l'aéronef AC fournies par un système extérieur au dispositif ou une distance entre la position courante de l'aéronef AC et un point de départ ou d'arrivée de l'aéronef AC.

Selon une variante du huitième mode de réalisation, la ligne de séparation 11 présente une épaisseur E' égale à un angle de tangage défini par la différence entre une ligne d'horizon naturel et une ligne d'horizon qui est fonction de la distance prédéterminée 17. L'épaisseur E' est déterminée de la même manière que l'épaisseur E' du septième mode de réalisation.

Selon un neuvième mode de réalisation, l'altitude de terrain survolé $Zterrain_{feet}$ est égale à une altitude minimale du terrain survolé par l'aéronef AC comprise dans un secteur 21 de cylindre 20 (figure 13). Le cylindre 20 étant centré sur l'aéronef AC. Le secteur 21 de cylindre 20 présente un rayon égal à la distance prédéterminée 17 et présente un angle d'ouverture $\theta$ correspondant au champ de vision 21 maximal.

Ainsi, en reprenant l'équation précédente, l'angle de tangage $\Delta^0$ de la ligne de séparation 11 est déterminé en remplaçant l'altitude du terrain autour de l'aéronef AC $Zterrain_{feet}$ par altitude minimale du terrain survolé par l'aéronef AC comprise dans le secteur 21 de cylindre 20.

Selon une variante du neuvième mode de réalisation, la ligne de séparation 11 présente une épaisseur E' égale à un angle de tangage défini par la différence entre une ligne d'horizon naturel et une ligne d'horizon qui est fonction de la distance prédéterminée. L'épaisseur E' est déterminée de la même manière que l'épaisseur E' du septième mode de réalisation.

Selon un dixième mode de réalisation, l'angle de tangage $\Delta^0$ de la ligne de séparation 11 est déterminé directement à partir d'un angle apparent du terrain visible depuis la position de l'aéronef AC.

Pour cela, le secteur 21 de cylindre 20 est coupé en n coupes discrètes selon les angles $\theta_1$, ..., $\theta_n$ (figure 14).

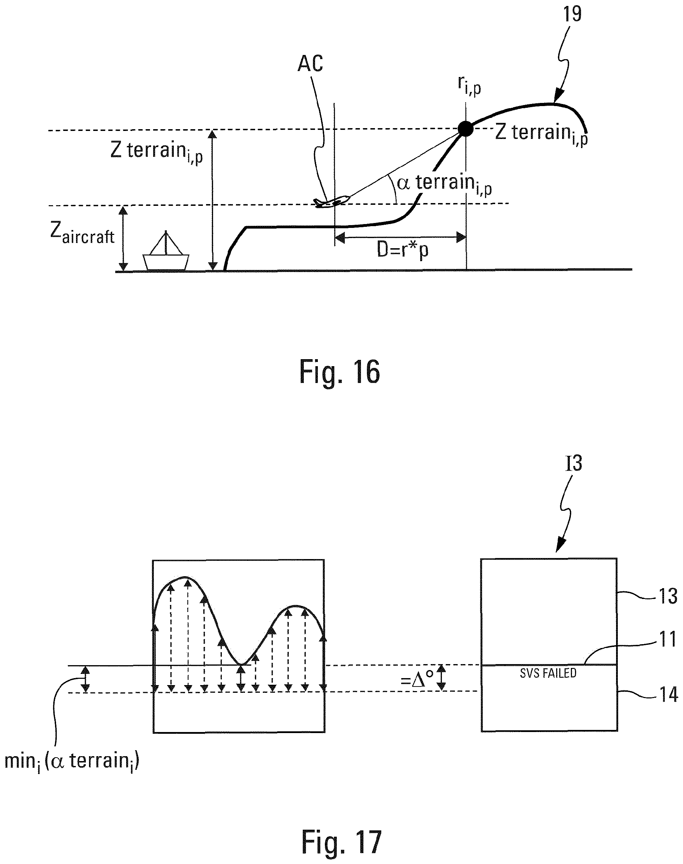

Pour chacune des coupes discrètes $\theta_1$, ..., $\theta_n$, on détermine le plus grand angle de terrain apparent $\alpha terrain_i$ avec l'horizon. Pour obtenir cet angle $\alpha terrain_i$ pour chacune des coupes discrètes $\theta_1$, ..., $\theta_i$, ..., $\theta_n$, l'altitude du terrain peut être déterminée en plusieurs points $r_1$, $r_2$, ..., $r_p$, ..., $r_m$ le long de la coupe discrète (figures 15 et 16). La distance entre l'aéronef AC et le point $r_m$ correspond à la distance prédéterminée 17. On obtient alors un angle $\alpha terrain_{i,p}$.

La figure 16 représente la détermination de l'angle $\alpha terrain_{i,p}$ pour une coupe discrète $\theta_i$ et un point $r_p$.

Ainsi, l'angle $\alpha terrain_{i,p}$ est déterminé par l'équation suivante :

$$\alpha terrain_{i,p} = \text{Arctan}\left(\frac{Zterrain_{i,p} - Zaircraft}{r_p}\right).$$

Pour toute coupe discrète $\theta_i$, l'angle $\alpha terrain_i$ est déterminé en par l'équation suivante :

$$\alpha terrain_i = \max_{p=1}^{m}\left[\alpha terrain_{i,p}\right].$$

L'angle de tangage $\Delta^0$ positionnant la ligne de séparation 11 correspond alors au à angle $\alpha terrain_i$ minimal (figure 17) :

$$\Delta^0 = \alpha terrain = \min_{i=1}^{n}\left[\alpha terrain_i\right].$$

Pour le premier mode de réalisation, l'élément indicatif 12 est disposé à une distance représentative d'un angle de tangage $\Delta^0$ par rapport à la ligne de séparation 11 correspondant à un angle défini par la différence entre l'angle de tangage nul de l'aéronef AC et une ligne d'horizon naturel lorsque l'aéronef AC vole à une altitude maximale. Pour les autres modes de réalisation, l'élément indicatif 12 peut être « collé » sous la ligne de séparation 11 selon une première configuration.

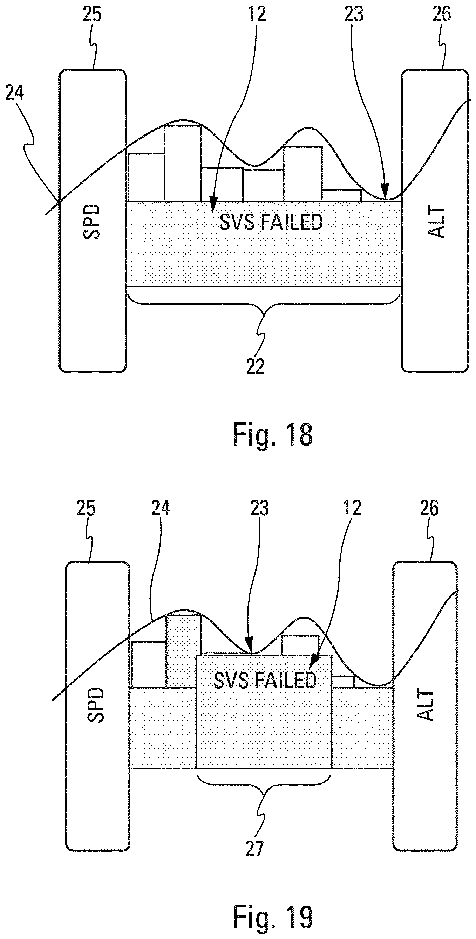

Selon une deuxième configuration (figures 18 et 19), l'élément indicatif 12 peut être disposé à une distance correspondant un angle de tangage inférieur ou égal à un angle de tangage correspondant au point le plus bas 23 d'au moins une ligne de crêtes 24 vue selon un champ de vision d'affichage 22, 27. Chacune des lignes de crêtes 24 correspond à une ligne d'horizon naturel pour différents points typiques d'une trajectoire d'approche, d'une trajectoire de remise des gaz ou d'une trajectoire de décollage de l'aéronef AC. Chaque ligne d'horizon naturel correspond à un horizon 18 de l'image I2 pour chacun des différents points typiques. Les lignes de crêtes 24 sont déterminées pour des pistes d'atterrissage d'aéroports spécifiques.

De façon non limitative, les points typiques sont déterminés à partir d'au moins un des paramètres suivants :

- la piste d'atterrissage d'approche sélectionnée,

- la piste d'atterrissage courante sur laquelle l'aéronef AC est susceptible d'atterrir,

- l'altitude de l'aéronef AC,

- l'altitude du seuil de la piste d'atterrissage sélectionnée,

- les déviations d'approche latérales et verticales,

- l'angle d'approche de trajectoire vertical,

- l'altitude de décision minimale,

- la vitesse maximale ascensionnelle de décollage.

Le champ de vision d'affichage 22 peut correspondre au champ de vision total susceptible d'être affiché par un écran de vol principal PFD (figure 18). Par exemple, le champ de vision d'affichage est situé entre une échelle de vitesse 25 (SPD) indiquant une vitesse affichée sur l'image I1 et une échelle d'altitude 26 (ALT) indiquant une altitude affichée sur l'image I1.

Le champ de vision d'affichage 27 peut aussi correspondre à une portion du champ de vision total susceptible d'être affiché par l'écran de vol principal PFD (figure 19).

Selon une première variante, les lignes de crêtes 24 sont prédéterminées puis stockées dans une base de données mémoire de l'aéronef AC. Avantageusement, les lignes de crêtes 24 sont sous forme discrète afin de minimiser la mémoire requise pour les stocker.

Selon une deuxième variante, les lignes de crêtes 24 sont déterminées à chaque vol de l'aéronef AC pour être stockées dans la base de données mémoire de l'aéronef AC ou pour mettre à jour la ou les lignes de crêtes 24 déjà stockées dans la base de données mémoire.

L'invention concerne également un procédé d'insensibilisation à des pannes d'un système d'affichage d'un aéronef AC configuré pour afficher une représentation synthétique de terrain.

Le procédé d'insensibilisation (figure 1) comprend les étapes suivantes :

- une étape E1 d'acquisition, mise en oeuvre par le module d'acquisition 3, consistant à acquérir des données d'environnement et des paramètres de vol courants de l'aéronef AC dont au moins une attitude, une altitude, une position tridimensionnelle et un cap ;
- une étape E2 de génération, mise en oeuvre par le module de génération 4, consistant à générer l'image I1 représentant une symbologie de vol comprenant au moins une ligne de référence de tangage nul, l'image I1 indiquant un angle de tangage par rapport un angle de tangage nul de l'aéronef AC, la ligne de référence de tangage nul étant représentative de l'angle de tangage nul de l'aéronef AC, l'image I1 étant générée à partir d'au moins l'attitude ;
- une étape E3 de génération, mise en oeuvre par le module de génération 5, consistant à générer l'image I2 représentant une topographie d'un terrain survolé par l'aéronef AC à partir d'au moins l'attitude, le cap, la position tridimensionnelle et les données d'environnement ;
- une étape E4 de génération, mise en oeuvre par le module de génération 6, consistant à générer l'image I3 comprenant au moins deux parties séparées par une ligne de séparation déterminée à partir de l'attitude de l'aéronef AC, une première partie 13 comportant des pixels présentant une valeur représentative d'une première gamme de couleur, une deuxième partie 14 comportant des pixels présentant une valeur représentative d'une deuxième gamme de couleur ;
- une étape E5 de génération, mise en oeuvre par le module de génération 7, consistant à générer l'image I4 en superposant dans l'ordre l'image I1, l'image I2 et l'image I3, l'image I1 étant placée au premier plan ;
- une étape E6 de transmission, mise en oeuvre par le module de transmission 8, consistant à transmettre au dispositif utilisateur 9 un signal représentatif de l'image I4.

L'étape E3 de génération peut comprendre les sous-étapes suivantes :

- une sous-étape E31 de détermination, mise en oeuvre par le sous-module de détermination 51, consistant à déterminer la topographie du terrain survolé par l'aéronef AC à partir d'au moins l'attitude, la position tridimensionnelle, le cap, et les données d'environnement ;
- une sous-étape E32 d'attribution, mise en oeuvre par le sous-module d'attribution 52, consistant à attribuer au moins une valeur de pixel au premier ensemble de pixels faisant partie de l'image I2, la ou les valeurs de pixel étant représentatives de la topographie du terrain survolé par l'aéronef AC ;
- une sous-étape E33 d'attribution, mise en oeuvre par le sous-module d'attribution 53, consistant à attribuer une valeur représentative d'un pixel transparent au deuxième ensemble de pixels faisant partie de l'image I2, le deuxième ensemble de pixels correspondant à un ensemble de l'image I2 ont les pixels n'appartiennent pas au premier ensemble de pixels.

L'étape E4 de génération comprend les sous-étapes suivantes :

- une sous-étape E41 de détermination, mise en oeuvre par le sous-module de détermination 61, consistant à déterminer une position de la ligne de séparation à partir de la ligne de référence de tangage nul, la ligne de séparation étant parallèle à la ligne de référence de tangage nul 10, la partie 14 de l'image I3 étant en correspondance au moins en partie avec la topographie du terrain survolé 15 par l'aéronef AC représentée sur l'image I2 lorsque l'image I1, l'image I2 et l'image I3 sont superposées dans l'étape E5 de génération ;
- une sous-étape E42 d'ajout, mise en oeuvre par le module d'ajout 62, consistant à ajouter l'élément indicatif 12 d'une erreur sur la partie 14 de l'image I3.

## Revendications

1. Procédé d'insensibilisation à des pannes d'un système d'affichage d'un aéronef (AC) configuré pour afficher une représentation synthétique de terrain,
   **caractérisé en ce qu'**il comprend les étapes suivantes :

   - une étape (E1) d'acquisition, mise en oeuvre par un module d'acquisition (3), consistant à acquérir des données d'environnement et des paramètres de vol courants de l'aéronef (AC) dont au moins une attitude, une altitude, une position tridimensionnelle et un cap ;
   - une première étape (E2) de génération, mise en oeuvre par un premier module de génération (4), consistant à générer une première image (I1) représentant une symbologie de vol comprenant au moins une ligne de référence de tangage nul, la première image (I1) indiquant un angle de tangage par rapport un angle de tangage nul de l'aéronef (AC), la ligne de référence de tangage nul étant représentative de l'angle de tangage nul de l'aéronef (AC), la première image (I1) étant générée à partir d'au moins l'attitude ;

- une deuxième étape (E3) de génération, mise en oeuvre par un deuxième module de génération (5), consistant à générer une deuxième image (I2) représentant une topographie d'un terrain survolé par l'aéronef (AC) à partir d'au moins l'attitude, le cap, la position tridimensionnelle et les données d'environnement ;

- une troisième étape (E4) de génération, mise en oeuvre par un troisième module de génération (6), consistant à générer une troisième image (I3) comprenant au moins deux parties séparées par une ligne de séparation déterminée à partir de l'attitude de l'aéronef (AC), une première partie (13) comportant des pixels présentant une valeur représentative d'une première gamme de couleur, une deuxième partie (14) comportant des pixels présentant une valeur représentative d'une deuxième gamme de couleur ;

- une quatrième étape (E5) de génération, mise en oeuvre par un quatrième module de génération (7), consistant à générer une quatrième image (I4) en superposant dans l'ordre la première image (I1), la deuxième image (I2) et la troisième image (I3), la première image (I1) étant placée au premier plan, de telle façon que lorsque la topographie du terrain survolé représentée sur la deuxième image est décalée vers le bas du fait d'une panne, la deuxième partie de la troisième image est visible sur la quatrième image, mettant ainsi en évidence ladite panne ;

- une étape (E6) de transmission, mise en oeuvre par un module de transmission (8), consistant à transmettre à un dispositif utilisateur (9) un signal représentatif de la quatrième image (I4).

2. Procédé selon la revendication 1,
**caractérisé en ce que** la deuxième étape (E3) de génération comprend les sous-étapes suivantes :

- une première sous-étape (E31) de détermination, mise en oeuvre par un premier sous-module de détermination (51), consistant à déterminer la topographie du terrain survolé par l'aéronef (AC) à partir d'au moins l'attitude, la position tridimensionnelle, le cap et les données d'environnement ;

- une première sous-étape (E32) d'attribution, mise en oeuvre par un premier sous-module d'attribution (52), consistant à attribuer au moins une valeur de pixel à un premier ensemble de pixels faisant partie de la deuxième image (I2), la ou les valeurs de pixel étant représentatives de la topographie du terrain survolé par l'aéronef (AC) ;

- une deuxième sous-étape (E33) d'attribution, mise en oeuvre par un deuxième sous-module d'attribution (53), consistant à attribuer une valeur représentative d'un pixel transparent à un deuxième ensemble de pixels faisant partie de la deuxième image (I2), le deuxième ensemble de pixels correspondant à un ensemble de la deuxième image (I2) dont les pixels n'appartiennent pas au premier ensemble de pixels.

3. Procédé selon l'une quelconque des revendications 1 ou 2,
**caractérisé en ce que** la troisième étape (E4) de génération comprend les sous-étapes suivantes :

- une deuxième sous-étape (E41) de détermination, mise en oeuvre par un deuxième sous-module de détermination (61), consistant à déterminer une position de la ligne de séparation à partir de la ligne de référence de tangage nul, la ligne de séparation étant parallèle à la ligne de référence de tangage nul (10), la deuxième partie (14) de la troisième image (I3) étant en correspondance au moins en partie avec la topographie du terrain survolé (15) par l'aéronef (AC) représentée sur la deuxième image (I2) lorsque la première image (I1), la deuxième image (I2) et la troisième image (I3) sont superposées dans la quatrième étape (E5) de génération ;

- une sous-étape (E42) d'ajout, mise en oeuvre par un module d'ajout (62), consistant à ajouter un élément indicatif (12) d'une erreur sur la deuxième partie (14) de la troisième image (I3) de façon à signaler explicitement ladite panne, cet élément indicatif (12) étant visible sur la quatrième image lorsque la topographie du terrain survolé représentée sur la deuxième image est décalée vers le bas du fait de la panne.

4. Procédé selon la revendication 3,
**caractérisé en ce que** la ligne de séparation (11) est disposée à une position correspondant à un angle de tangage nul de l'aéronef (AC) ;

et **en ce que** l'élément indicatif (12) est disposé à une distance correspondant à un angle de tangage ($\Delta^0$) par rapport à la ligne de séparation (11) correspondant à un angle défini par la différence entre l'angle de tangage nul de l'aéronef (AC) et une ligne d'horizon naturel lorsque l'aéronef (AC) vole à une altitude maximale.

5. Procédé selon la revendication 3,
**caractérisé en ce que** la ligne de séparation (11) est disposée à un angle de tangage ($\Delta^0$), par rapport à une position d'angle de tangage nul de l'aéronef (AC), égal à la différence entre l'angle de tangage nul de l'aéronef (AC) et une ligne d'horizon naturel lorsque l'aéronef (AC) vole à une altitude maximale.

6. Procédé selon la revendication 3,
**caractérisé en ce que** la ligne de séparation (11) est disposée à un angle de tangage ($\Delta^0$), par rapport à une position de tangage nul de l'aéronef (AC), qui est fonction de l'altitude de l'aéronef (AC).

7. Procédé selon la revendication 3,
**caractérisé en ce que** la ligne de séparation (11) présente une épaisseur (E) égale à un angle de tangage ($\Delta^0$) défini par la différence entre un angle de tangage nul de l'aéronef (AC) et une ligne d'horizon naturel lorsque l'aéronef (AC) vole à une altitude maximale, la ligne de séparation (11) comprenant des pixels présentant un gradient de valeurs selon l'épaisseur (E) entre, d'une part, une valeur égale à une valeur représentative de la première gamme de couleur pour une première rangée de pixels adjacents à la première partie (13) de la troisième image (I3) et, d'autre part, une valeur égale à une valeur représentative de la deuxième gamme de couleur pour une deuxième rangée de pixels adjacents à la deuxième partie (14) de la troisième image (I3), la première rangée de pixels étant disposée à une position correspondant à l'angle de tangage nul de l'aéronef (AC).

8. Procédé selon la revendication 3,
**caractérisé en ce que** la ligne de séparation (11) est disposée à un angle de tangage ($\Delta^0$), par rapport à une position d'angle de tangage nul de l'aéronef (AC), égal à la différence entre l'angle de tangage nul de l'aéronef (AC) et une ligne d'horizon, la ligne d'horizon étant déterminée à partir d'une distance prédéterminée (17) définie par un champ de vision (21) maximal de la topographie du terrain (15) représentée sur la deuxième image (I2), lorsque l'aéronef vole à une altitude maximale.

9. Procédé selon la revendication 3,
**caractérisé en ce que** la ligne de séparation (11) est disposée à un angle de tangage ($\Delta^0$), par rapport à une position de tangage nul de l'aéronef (AC), fonction de l'altitude de l'aéronef (AC) et d'une distance prédéterminée (17) définie par un champ de vision (21) maximal de la topographie du terrain (15) représentée sur la deuxième image (I2).

10. Procédé selon la revendication 3,
**caractérisé en ce que** la ligne de séparation (11) présente une épaisseur (E') égale à un angle de tangage ($\Delta^0$) défini par la différence entre une ligne d'horizon naturel et une ligne d'horizon qui est fonction d'une distance prédéterminée (17) définie par un champ de vision (21) maximal de la topographie du terrain (15) représentée sur la deuxième image (I2), la ligne de séparation (11) comportant des pixels présentant une valeur représentative d'une troisième gamme de couleur, la ligne de séparation (11) étant disposée à un angle de tangage, par rapport à une position de tangage nul de l'aéronef (AC), égal à la différence entre l'angle de tangage nul et la ligne d'horizon naturel.

11. Procédé selon la revendication 3 ou 10,
**caractérisé en ce que** la ligne de séparation (11) est disposée à un angle de tangage ($\Delta^0$), par rapport à une position de tangage nul de l'aéronef (AC), qui est fonction, d'une part, de l'altitude de l'aéronef (AC) diminuée d'une altitude du terrain survolé par l'aéronef (AC) et, d'autre part, d'une distance prédéterminée (17) définie par un champ de vision (21) maximal de la topographie du terrain représentée sur la deuxième image (I2).

12. Procédé selon la revendication 11,
**caractérisé en ce que**, si l'aéronef (AC) se présente dans une des situations suivantes :

- à l'approche finale d'une phase d'atterrissage,
- à une phase de décollage
- à une phase de remise des gaz,

alors l'altitude du terrain survolé est égale à une altitude du terrain survolé courante lors d'une des situations précédentes,
sinon l'altitude du terrain survolé est supposée nulle.

13. Procédé selon la revendication 11,
**caractérisé en ce que** l'altitude de terrain survolé est égale à une altitude minimale du terrain survolé par l'aéronef

(AC) comprise dans un secteur de cylindre, le cylindre étant centré sur l'aéronef (AC), le secteur de cylindre (20) présentant un rayon égal à la distance prédéterminée (17) et présentant un angle d'ouverture ($\theta$) du champ de vision (21) maximal.

**14.** Dispositif d'insensibilisation à des pannes d'un système d'affichage d'un aéronef (AC) configuré pour afficher une représentation synthétique de terrain,
**caractérisé en ce qu'**il comprend les modules suivants :

- un module d'acquisition (3) configuré pour acquérir des données d'environnement et des paramètres de vol courants de l'aéronef (AC) dont au moins une attitude, une altitude, une position tridimensionnelle et un cap ;
- un premier module de génération (4) configuré pour générer une première image (I1) représentant une symbologie de vol comprenant au moins une ligne de référence de tangage nul, la première image (I1) indiquant un angle de tangage par rapport un angle de tangage nul de l'aéronef (AC), la ligne de référence de tangage nul étant représentative de l'angle de tangage nul de l'aéronef (AC), la première image (11) étant générée à partir d'au moins l'attitude ;
- un deuxième module de génération (5) configuré pour générer une deuxième image (I2) représentant une topographie d'un terrain survolé par l'aéronef (AC) à partir d'au moins l'attitude, le cap, la position tridimensionnelle et les données d'environnement ;
- un troisième module de génération (6) configuré pour générer une troisième image (I3) comprenant au moins deux parties séparées par une ligne de séparation déterminée à partir de l'attitude de l'aéronef (AC), une première partie comportant des pixels présentant une valeur représentative d'une première gamme de couleur, une deuxième partie comportant des pixels présentant une valeur représentative d'une deuxième gamme de couleur ;
- un quatrième module de génération (7) configuré pour générer une quatrième image (I4) en superposant dans l'ordre la première image (I1), la deuxième image (I2) et la troisième image (I3), la première image (I1) étant placée au premier plan, de telle façon que lorsque la topographie du terrain survolé représentée sur la deuxième image est décalée vers le bas du fait d'une panne, la deuxième partie de la troisième image est visible sur la quatrième image, mettant ainsi en évidence ladite panne ;
- un module de transmission (8) configuré pour transmettre à un dispositif utilisateur (9), un signal représentatif de la quatrième image (I4).

**15.** Aéronef,
**caractérisé en ce qu'**il comporte un dispositif d'insensibilisation à des pannes, tel que celui spécifié sous la revendication 14.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

25     12     23     26

24

SPD

SVS FAILED

ALT

22

Fig. 18

25     24     23     12     26

SPD

SVS FAILED

ALT

27

Fig. 19

Europäisches
Patentamt

European
Patent Office

Office européen
des brevets

**RAPPORT DE RECHERCHE EUROPEENNE**

Numéro de la demande

EP 19 16 9566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/267422 A1 (FEYEREISEN THEA L [US] ET AL) 18 septembre 2014 (2014-09-18) * alinéas [0002], [0004] * * alinéas [0031], [0032] * * figures 1-3 * ----- | 1-15 | INV. G01C23/00 B64D45/00 |
| X | FR 3 058 233 A1 (THALES SA [FR]) 4 mai 2018 (2018-05-04) * page 1, ligne 6 - ligne 27 * * page 5, ligne 27 - page 7, ligne 35 * * page 9, ligne 11 - page 10, ligne 29 * * figures 1-7 * ----- | 1-15 | |
| X | EP 2 413 101 A1 (HONEYWELL INT INC [US]) 1 février 2012 (2012-02-01) * alinéa [0028] - alinéa [0030] * * figures 1-3 * ----- | 1-15 | |
| X | US 7 724 155 B1 (ANDERSON ERIC N [US] ET AL) 25 mai 2010 (2010-05-25) * colonne 3, ligne 53 - colonne 4, ligne 58 * * figures 1-9 * ----- | 1-15 | DOMAINES TECHNIQUES RECHERCHES (IPC) |
| A | FR 3 053 818 A1 (THALES SA [FR]) 12 janvier 2018 (2018-01-12) * le document en entier * ----- | 1-15 | G01C G08G B64D B64F |

Le présent rapport a été établi pour toutes les revendications

| Lieu de la recherche | Date d'achèvement de la recherche | Examinateur |
|---|---|---|
| La Haye | 14 octobre 2019 | Yosri, Samir |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 19 16 9566

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2019

| Document brevet cité au rapport de recherche | Date de publication | Membre(s) de la famille de brevet(s) | Date de publication |
|---|---|---|---|
| US 2014267422 A1 | 18-09-2014 | CN 104044745 A<br>EP 2778617 A2<br>US 2014267422 A1 | 17-09-2014<br>17-09-2014<br>18-09-2014 |
| FR 3058233 A1 | 04-05-2018 | CN 108024070 A<br>FR 3058233 A1<br>US 2018122331 A1 | 11-05-2018<br>04-05-2018<br>03-05-2018 |
| EP 2413101 A1 | 01-02-2012 | CN 102343980 A<br>EP 2413101 A1<br>US 2012026190 A1 | 08-02-2012<br>01-02-2012<br>02-02-2012 |
| US 7724155 B1 | 25-05-2010 | AUCUN | |
| FR 3053818 A1 | 12-01-2018 | CN 107591031 A<br>FR 3053818 A1<br>US 2018010922 A1 | 16-01-2018<br>12-01-2018<br>11-01-2018 |

EPO FORM P0460

Pour tout renseignement concernant cette annexe : voir Journal Officiel de l'Office européen des brevets, No.12/82

**EP 3 575 746 A1**

## RÉFÉRENCES CITÉES DANS LA DESCRIPTION

### Documents brevets cités dans la description

- US 2014267422 A
- FR 3058233
- EP 2413101 A
- US 7724155 B